# EUROPÄISCHE PATENTSCHRIFT

(11) **EP 2 756 198 B1**
(45) Veröffentlichungstag und Bekanntmachung des Hinweises auf die Patenterteilung: **11.10.2017**
(21) Anmeldenummer: 12761880.9
(22) Anmeldetag: 15.08.2012
(51) Int. Cl.: F15B 15/24, F16D 25/08

(54) **ANSCHLAGANORDNUNG FÜR DIE EINGEFAHRENE KOLBENSTANGE EINES GEBERZYLINDERS**
END OF STROKE STOPPER FOR THE RETRACTED PISTON ROD OF A MASTER CYLINDER
BUTÉE DE FIN DE COURSE DE RÉTRACTION POUR LA TIGE DE PISTON D'UN MAÎTRE CYLINDRE

(30) Priorität: 16.09.2011 DE 102011082813
(43) Veröffentlichungstag der Anmeldung: 23.07.2014
(73) Patentinhaber: Schaeffler Technologies AG & Co. KG, 91074 Herzogenaurach (DE)
(72) Erfinder: HERDT, Eduard, 76307 Karlsbad (DE); SEIFERMANN, Jürgen, 77886 Lauf (DE)
(86) Internationale Anmeldenummer: PCT/DE2012/000823
(87) Internationale Veröffentlichungsnummer: WO 2013/037341

(56) Entgegenhaltungen:
- DE-A1- 19 753 105
- DE-A1-102010 022 106
- US-A- 3 309 116
- US-A- 4 469 014

## Beschreibung

Die vorliegende Erfindung betrifft einen Geberzylinder mit einer Anschlaganordnung für eine eingefahrene Kolbenstange des Zylinders. Dabei weist die Anschlaganordnung zwei Halbschalen auf, die an der Kolbenstange des Geberzylinders montiert werden.

Aus dem Stand der Technik ist ein Kolbenstangeanschlag für die Kolbenstange eines Geberzylinders bekannt. Die DE 197 53 105 A1 offenbart einen Geberzylinder mit einer Anschlaganordnung für eine Kolbenstange, wobei ein Anschlag in eine korrespondierende Ausnehmung in der Kolbenstange einsetzbar und fixierbar ist. Im Stand der Technik liegt der Kolbenstangenanschlag mit einer kugelförmigen Fläche an einer passenden Gegenfläche eines mit dem Geberzylinder verbundenen Schweißringes an. Über die Kolbenstange wird die Kraft vom Pedal, das mechanisch an die dem Geberzylinder abgewandte Seite der Kolbenstange gekoppelt ist, eingeleitet und über die Anlagefläche des Kolbenstangenanschlages an zwei Rippen der Kolbenstange auf den Kolbenstangenanschlag und schließlich an den Schweißring weitergeleitet. Dieser wiederum ist mit dem Gehäuse des Geberzylinders verbunden, das über die Anbindung zum Pedalbock die Kraft abstützt.

Ein Problem besteht dabei darin, dass dann, wenn sich die Kolbenstange in der eingefahrenen Position befindet, durch die kugelförmige Anlagefläche zwischen dem Kolbenstangenanschlag und dem Schweißring Querkräfte entstehen, die auf jede Halbschale des Kolbenstangenanschlags einwirken. Diese Querkräfte müssen über die die beiden Halbschalen verbindenden Schnapphaken abgestützt werden. Dies bedeutet, dass diese bekannten Kolbenstangenanschläge für die Kolbenstangen von Geberzylindern im Hinblick auf ihre Belastbarkeit Grenzen aufweisen. Üblicherweise halten die bekannten Kolbenstangenanschläge höhere Belastungen als 5000 Newton nicht aus. Bei höheren Belastungen kommt es dazu, dass die die Halbschalen verbindenden Schnapphaken brechen oder sich aufbiegen, was dazu führt, dass sich die Halbschalen voneinander trennen und die Anschlagfunktion nicht mehr erfüllt wird.

Die Aufgabe der vorliegenden Erfindung besteht daher darin, einen Anschlaganordnung für die eingefahrene Kolbenstange eines Geberzylinders zu schaffen, die relativ hohe Belastungen, insbesondere Belastungen bis zu 6000 Newton, aushält.

Diese Aufgabe wird durch einen Geberzylinder mit einer Anschlaganordnung mit den Merkmalen des Patentanspruches 1 gelöst.

Der erfindungsgemäße Geberzylinder mit einer Anschlaganordnung für einen eingefahrenen Kolben des Zylinders, umfasst einem mit dem Gehäuse des Geberzylinders verbundenen Anschlagring und einen Kolbenstangeanschlag, der an seiner dem Anschlagring zugewandten Seite eine kugelförmige Fläche aufweist, die an einer komplementär ausgebildeten kugelförmigen Fläche des Anschlagringes anliegt. Der Kolbenstangenanschlag weist zwei miteinander verbundene Halbschalen auf, die die durch den Anschlagring verlaufende Kolbenstange umgeben. Die Halbschalen sind dabei mit der Hilfe einer Verbindungseinrichtung miteinander verbunden. Jede Halbschale ist mit der Hilfe einer Schnappverbindung mit der Kolbenstange verbunden. Ferner weist die Kolbenstange wenigstens einen axial zur Seite des Anschlagringes vorstehenden Haltebereich auf, an dem im Montagezustand ein axial vorstehender Haltebereich des Kolbenstangenanschlages verriegelnd angreift. Durch diese Ausgestaltung der erfindungsgemäßen Anschlaganordnung, bei der die Verbindung zwischen dem Anschlagring und der Kolbenstange durch drei unterschiedliche Verbindungsmittel in Kombination erfolgt, wird vorteilhafter Weise eine verbesserte Einleitung der eingangs genannten Querkräfte erreicht. Beschädigungen der Halbschalen, die dazu führen können, dass die Anschlagfunktion nicht mehr erfüllt wird, werden bei der erfindungsgemäßen Anschlaganordnung vermieden.

Bei einer vorteilhaften Ausgestaltung der Erfindung umfasst die Verbindungseinrichtung jeweils einen über die Trennfläche einer Halbschale senkrecht vorstehenden Stift, der in eine in der Trennfläche der jeweils anderen Halbschale angeordnete Vertiefung eingreift. Auf diese Weise ist eine schnelle, stabile und einfache sowie transportsichere Verbindung der beiden Halbschalen möglich.

Die Schnappverbindung weist vorteilhafter Weise an jeder Halbschale wenigstens ein Laschenteil auf, das im Montagezustand eine Einrastfläche der Kolbenstange verriegelnd, vorzugsweise mit einer an ihm vorgesehenen Einrastnase, hintergreift.

An der Kolbenstange kann wenigstens ein radial vorstehender Haltering vorgesehen sein, der einen axial zur Seite des Anschlagringes vorstehenden Haltebereich aufweist, den im Montagezustand jeweils ein axial vorstehender Haltebereich der Halbschalen verriegelnd untergreift. Auf diese Weise ist eine einfache Montage der in radialer Richtung zusammengefügten Halbschalen an der Kolbenstange durch Verschieben in axialer Richtung möglich.

Dabei können an der Kolbenstange axial voneinander beabstandet zwei Halteringe vorgesehen sein, deren axial vorstehende Haltebereiche im Montagezustand zwei an den Halbschalen axial voneinander beabstandete Haltebereiche verriegelnd übergreifen. Dadurch ergibt sich eine besonders stabile Befestigung der Halbschalen an der Kolbenstange.

Anstelle der zuvor erwähnten Verbindung der Halbschalen in radialer Richtung kann eine Verbindungseinrichtung jeweils einen über die Trennfläche einer Halbschalle vorstehenden, axial verlaufenden Vorsprung bzw. Steg aufweisen, der im Montagezustand in eine in der Trennfläche der jeweils anderen Halbschale angeordnete, komplementär ausgebildete Vertiefung verriegelnd eingreift. Besonders vorteilhaft ist es dabei, wenn die Vorsprünge und die Vertiefungen schwalbenschwanzartig ineinander eingreifen. Die Verbindung der Halbschalen miteinander erfolgt dabei in axialer Richtung.

Im Folgenden werden die Erfindung und deren Ausgestaltungen im Zusammenhang mit den Figuren näher erläutert. Es zeigen:
- Figur 1: eine Explosionsdarstellung des Schweiß- bzw. Anschlagringes, der Kolbenstange und der beiden Halbschalen einer ersten Ausführungsform der erfindungsgemäßen Anschlaganordnung,
- Figur 2: eine Darstellung der an der Kolbenstange montierten Halbschalen des Kolbenstangenanschlages sowie des Schweißringes jeweils teilweise im Schnitt,
- Figur 3: die an der Kolbenstange mit der Hilfe von Stiftverbindungen zu montierenden Halbschalen des Kolbenstangenanschlages,
- Figuren 4, 5: Darstellungen zur Erläuterung der Schritte zur Befestigung der Halbschalen an der Kolbenstange,
- Figur 6: einen Schnitt B-B durch den Kolbenstangenanschlag der Figur 2 zur Erläuterung der Stiftverbindung der beiden Halbschalen,
- Figur 7: eine zweite bevorzugte Ausführungsform der erfindungsgemäßen Anschlaganordnung in perspektivischer Darstellung,
- Figur 8: den an der Kolbenstange montierten Kolbenstangenanschlag sowie den Anschlagring des Geberzylinders zum Teil im Schnitt,
- Figur 9, 10: Darstellung zur Erläuterung der Schritte zur Befestigung der Halbschalen an der Kolbenstange, und
- Figur 11: einen Schnitt entlang der Linie B-B der Figur 8 zur Erläuterung einer schwalbenschwanzartigen Verbindung der Halbschalen des Kolbenstangenanschlages.

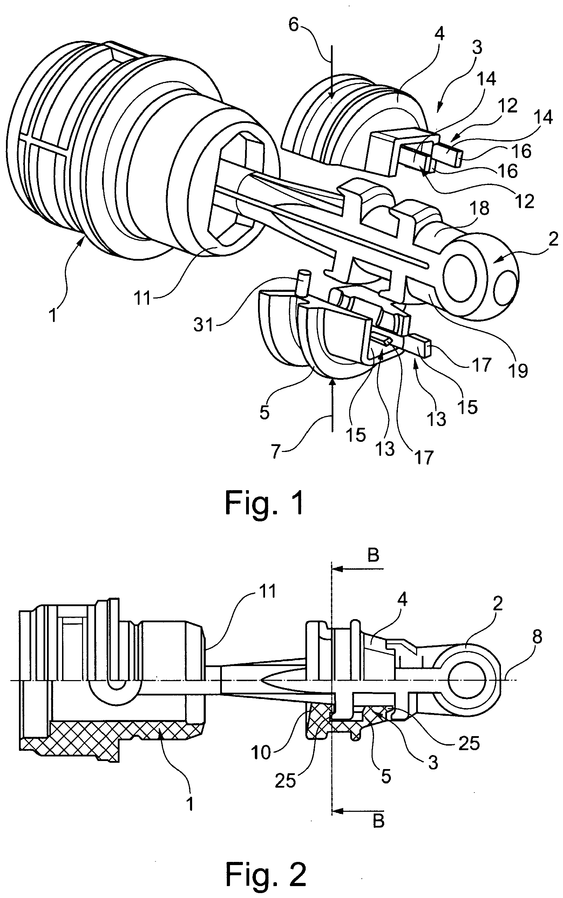

Gemäß der Figur 1, die eine erste erfindungsgemäße Ausführungsform der vorliegenden Anschlaganordnung zeigt, umfasst diese im Wesentlichen einen Anschlagring 1, der mit einem nicht näher dargestellten Zylindergehäuse eines Geberzylinders verbunden ist, eine Kolbenstange 2 sowie einen Kolbenstangenanschlag 3, der aus einer ersten Halbschale 4 und einer zweiten Halbschale 5 besteht. Bei dem Anschlagring 2 kann es sich vorzugsweise um einen an sich bekannten Schweißring handeln.

Die beiden Halbschalen 4 und 5 des Kolbenstangenanschlages 3 sind in der Richtung der Pfeile 6 und 7 an der Kolbenstange 2 montierbar. Dabei werden die Halbschalen 4 und 5 sich radial gegenüberliegend in Richtung auf die Kolbenstange 2 bewegt und dann, wenn sie an der Kolbenstange 2 anliegen, zu dem Kolbenstangenanschlag 3 verbunden. Dieser Zustand ist aus der Seitenansicht der Figur 2 erkennbar, die die vorliegende Anschlaganordnung oberhalb der Längsachse 8 in perspektivischer Darstellung und unterhalb der Längsachse 8 im Längsschnitt zeigt.

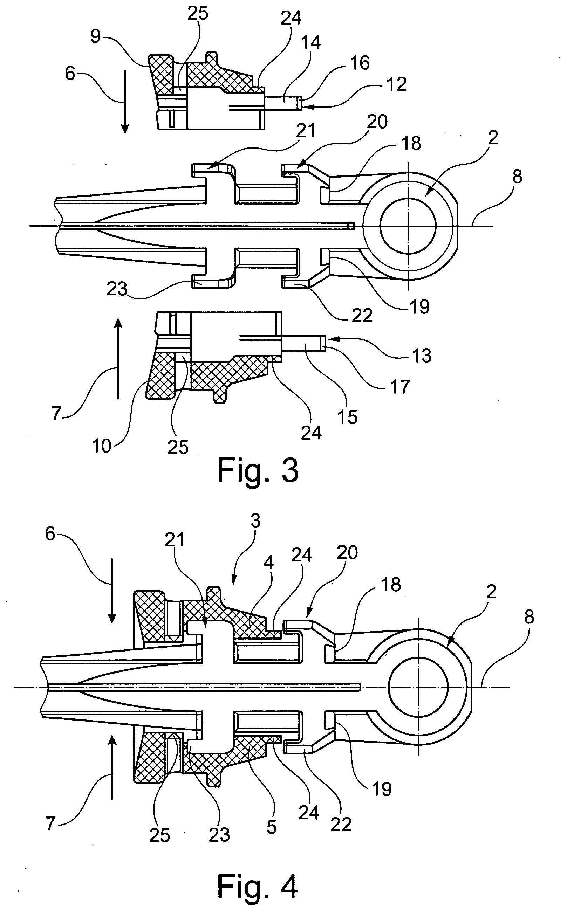

Es ist erkennbar (siehe auch Figur 3), dass die Halbschalen 4 und 5 jeweils eine halbkugelförmige, dem Schweißring 1 zugewandte Anlagefläche 9 bzw. 10 aufweisen, die, wenn die beiden Halbschalen 4, 5 miteinander verbunden und an der Kolbenstange 2 montiert sind, eine kugelförmige Anlagefläche bilden, die dann, wenn die Kolbenstange 2 vollständig in den Geberzylinder (nicht dargestellt) eingeschoben ist, an einer komplementär hierzu ausgebildeten Anlagefläche 11 des Anschlagringes 1 anliegt. Der genannte Zustand, in dem die Anlageflächen 9, 10 und 11 aneinander anliegen, wird auch als "Min-Extension" bezeichnet.

Jede Halbschale 4, 5 weist an ihrer dem Anschlagring 1 abgewandten Seite eine Schnappverbindung 12, 13 auf, die gemäß Figur 1 vorzugsweise jeweils zwei in Querrichtung zur Längsachse 8 gegenüberliegende Laschenteile 14 bzw. 15 umfasst, die jeweils axial verlaufen und an ihren Enden Einrastnasen 16, 17 aufweisen, die im Montagezustand der Halbschalen 4, 5 an der Kolbenstange 2 hinter eine ihnen zugeordneten Einrastfläche 18 bzw. 19 verriegelnd eingreifen, so dass die zu dem Kolbenanschlag 3 verbundenen Halbschalen 4, 5 axial an der Kolbenstange 2 verriegelt bzw. festgelegt sind.

Die Kolbenstange 2 weist, wie dies insbesondere aus den Figuren 1 und 3 ersichtlich ist, radial vorstehende, in der Umfangsrichtung der Kolbenstange 2 um die Längsachse 8 derselben verlaufende Halteringe 20, 21 auf, die an ihren Enden im Montagezustand axial in Richtung auf den Anschlagring 1 vorstehende, vorzugsweise ringförmige Haltebereiche 22, 23 aufweisen, die im Montagezustand axial vorstehende Haltebereiche 24 bzw. 25 der Halbschalen 4 bzw. 5 bzw. des Kolbenstangenanschlages 3 übergreifen. Dabei sind die genannten Haltebereiche 24, 25 nach der Verbindung der beiden Halbschalen 4,5 vorzugsweise ebenfalls ringförmig ausgestaltet.

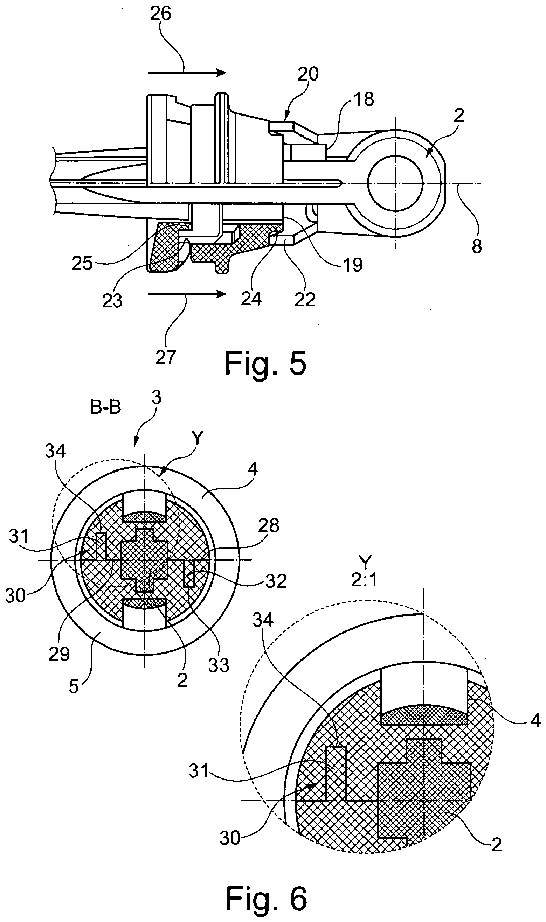

Die Figur 4 zeigt den Kolbenanschlag 3 nach dem Zusammenbau der Halbschalen 4, 5 in der Richtung der Pfeile 6, 7, während die Figur 5 den Montagezustand der in der Richtung der Pfeile 26, 27 axial verschobenen Halbschalen 4, 5 zeigt. Es ist ersichtlich, dass die Haltebereiche 24, 25 der Halbschalen 4, 5 die Haltebereiche 22, 23 der Halteringe 20, 21 der Kolbenstange 2 untergreifen. Auf diese Weise erfolgt im Montagezustand, in dem gleichzeitig auch die Einrastnasen 16, 17 der Laschenteile 13, 14 die ihnen zugeordneten Einrastflächen 18, 19 der Kolbenstange 2 hintergreifen (Figur 3), eine gleichzeitige Festlegung des Kolbenstangenanschlages 3 sowohl in beiden axialen Richtungen, als auch in radialer Richtung. Vorteilhafter Weise hintergreifen die Rastnasen 16, 17 der Haltelaschen 14, 15 die Einrastflächen 18, 19 dann, wenn die Haltebereiche 24, 25 axial vollständig in die Haltebereiche 22, 23 eingreifen und an den Halteringen 20, 21 jeweils anliegen.

Zur Vorzentrierung der beiden Halbschalen ist eine Verbindungsanordnung 30 vorgesehen, die insbesondere aus dem Querschnitt B-B und der entsprechenden Vergrößerung Y der Figur 6 hervorgeht. Die Verbindungsanordnung 30 umfasst bei der ersten Ausführungsform der vorliegenden Erfindung Stifte 32, 31, die über die Trennflächen 28, 29 der Halbschalen 4,5 senkrecht vorstehen und in entsprechende Vertiefungen 33, 34 eingreifen, die sich in den jeweils gegenüberliegenden Halbschalen 5, 4 befinden. Auf diese Weise werden durch den Eingriff der Stifte 31, 32 in die Vertiefungen 33, 34 der Zusammenhalt und die Stabilität des Kölbenstangenanschlages 3 sowohl nach dem Zusammenfügen der Halbschalen 4 und 5 als auch im Montagezustand derselben an der Kolbenstange 2 verbessert.

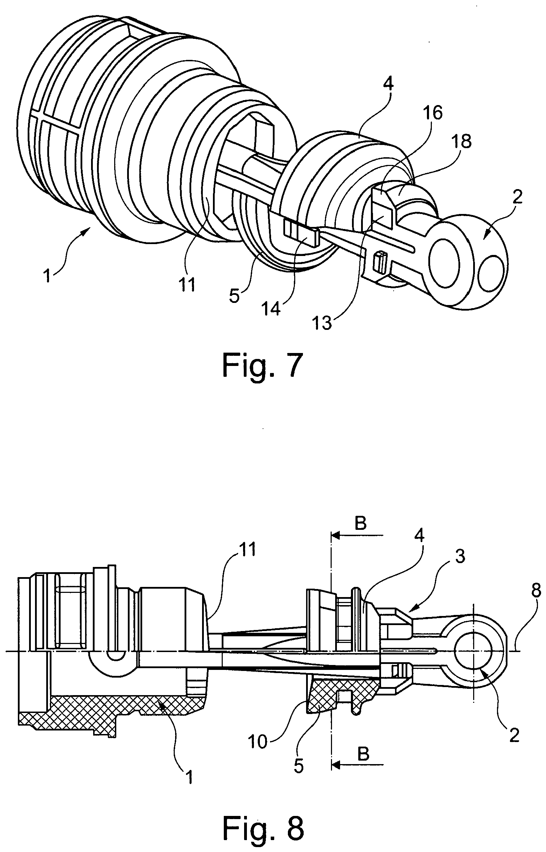

Im Folgenden wird nun im Zusammenhang mit den Figuren 7 bis 10 eine weitere Ausführungsform der erfindungsgemäßen Anschlaganordnung erläutert, bei der der Aufbau des Schweiß- bzw. Anschlagringes 1 und der Kolbenstange 2 im Wesentlichen demjenigen der Figuren 1 bis 6 entsprechen. Einzelheiten der Figuren 7 bis 10, die bereits-im Zusammenhang mit den Figuren 1 bis 6 erläutert wurden, sind daher in der entsprechenden Weise bezeichnet.

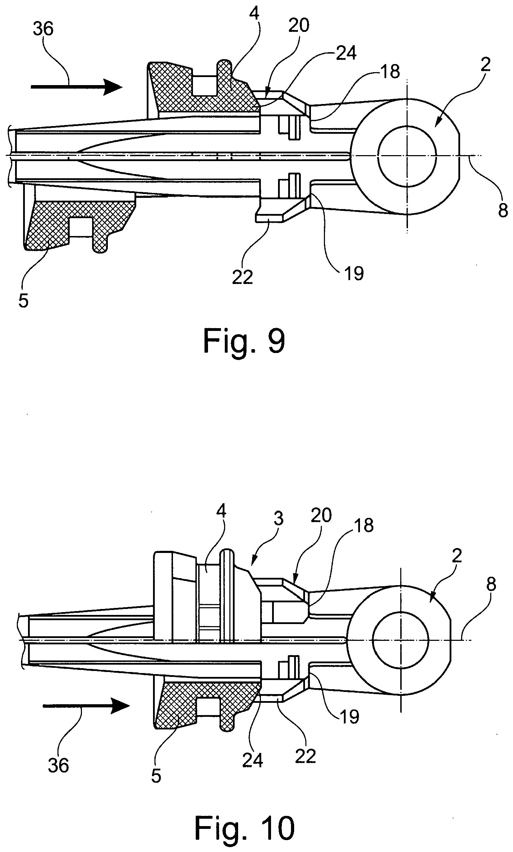

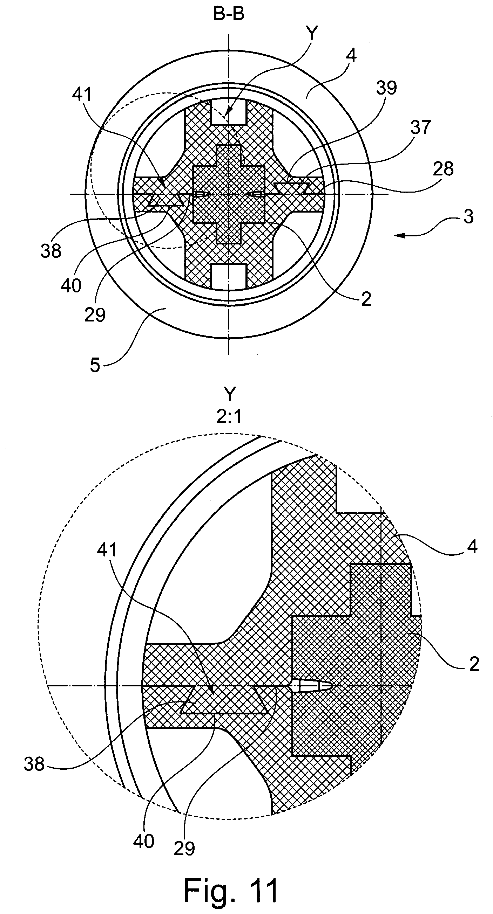

Im Wesentlichen unterscheidet sich die Ausführungsform der Figuren 7 bis 10 dadurch von der Ausführungsform der Figuren 1 bis 6, dass die Verbindungseinrichtung 41 für die beiden Halbschalen 4 und 5 des Kolbenstangenanschlages 3 anders aufgebaut ist als die Verbindungsanordnung 30 der Figuren 1 bis 6. Die Verbindungsanordnung 41 ist dabei so aufgebaut, dass die beiden Halbschalen 4 und 5 nicht in radialer Richtung, sondern in axialer Richtung zusammengefügt werden. Zu diesem Zweck ist die Verbindungsanordnung 41 ähnlich einer Schwalbenschwanzverbindung ausgestaltet, wobei, wie dies insbesondere in der Figur 9 dargestellt ist, die beiden Halbschalen 4 und 5 entlang des Pfeils 36 aneinander fixiert werden. Zu diesem Zweck weist die Verbindungsanordnung 41 gemäß dem Querschnitt der Figur 11 entlang der Linie B-B der Figur 8 über die Trennflächen 28, 29 der Halbschalen 4, 5 jeweils senkrecht hinaus verlaufende axiale Vorsprünge 37, 38 auf, die in entsprechende axiale Vertiefungen 39, 40 der Halbschalen 5, 4 eingreifen. Dabei sind die Vorsprünge 37, 38 jeweils keilförmig ausgebildet und greifen in die komplementär ausgebildeten Vertiefungen 39, 40 verriegelnd ein. Wenn daher die beiden Halbschalen 4 und 5 in der in der Figur 9 dargestellten Weise entlang des Pfeils 36 in der axialen Richtung auf der Kolbenstange 2 zusammengeschoben werden, greift der bei der zweiten Ausführungsform ebenfalls vorgesehene Haltebereich 24 der Halbschalen 4 und 5 unter den Haltebereich 22 des Halteringes 20 der Kolbenstange 2 (Figur 10).

Der aus den beiden Halbschalen 4 und 5 in dieser Weise zusammengefügte Kolbenstangenanschlag 3 erfüllt im Wesentlichen dieselben Vorteile des Kolbenanschlages der Ausführungsform der Figuren 1 bis 6. Insbesondere weisen die Halbschalen 4 und 5 auch bei der Ausführungsform der Figuren 7 bis 10 die oben erläuterten Haltelaschen 13 bzw. 14 mit den Einrastnasen 16 bzw. 17 auf, die die Anlageflächen 18 bzw. 19 der Kolbenstange 2 in der oben erläuterten Weise übergreifen.

### Bezugszeichenliste

- 1: Anschlagring
- 2: Kolbenstange
- 3: Kolbenstangenanschlag
- 4: Halbschale
- 5: Halbschale
- 6: Pfeil
- 7: Pfeil
- 8: Längsachse
- 9: Anlagefläche
- 10: Anlagefläche
- 11: Anlagefläche
- 12: Schnappverbindung
- 13: Schnappverbindung
- 14: Laschenteil
- 15: Laschenteil
- 16: Einrastnase
- 17: Einrastnase
- 18: Einrastfläche
- 19: Einrastfläche
- 20: Haltering
- 21: Haltering
- 22: Haltebereich
- 23: Haltebereich
- 24: Haltebereich
- 25: Haltebereich
- 26: Pfeil
- 27: Pfeil
- 28: Trennfläche
- 29: Trennfläche
- 30: Verbindungseinrichtung
- 31: Stift
- 32: Stift
- 33: Vertiefung
- 34: Vertiefung
- a.: Pfeil
- b.: Vorsprung
- c.: Vorsprung
- d.: Vertiefung
- e.: Vertiefung
- f.: Verbindungseinrichtung

## Patentansprüche

1. Geberzylinder mit einer Anschlaganordnung für einen eingefahrenen Kolben des Zylinders, mit einem mit einem Gehäuse des Geberzylinders verbundenen Anschlagring (1) und einem Kolbenstangenanschlag (3), der an seiner dem Anschlagring (1) zugewandten Seite eine kugelförmige Anlagefläche (9, 10) aufweist, die an einer komplementär ausgebildeten kugelförmigen Anlagefläche (11) des Anschlagringes anliegt, **dadurch gekennzeichnet, dass** der Kolbenstangenanschlag (3) zwei miteinander verbundene Halbschalen (4, 5) umfasst, die eine durch den Anschlagring (1) verlaufende Kolbenstange (2) des Geberzylinders umgeben, dass die Halbschalen (4, 5) mit der Hilfe einer Verbindungseinrichtung (30, 41) miteinander verbunden sind, dass jede Halbschale (4, 5) mit der Hilfe einer Schnappverbindung (12, 13) mit der Kolbenstange (2) verbunden ist, und dass die Kolbenstange (2) wenigstens einen axial zur Seite des Anschlagringes (1) vorstehenden Haltebereich (22, 23) aufweist, an dem im Montagezustand ein axial vorstehender Haltebereich (24) des Kolbenstangenanschlages (3) verriegelnd angreift.

2. Geberzylinder nach Anspruch 1, **dadurch gekennzeichnet, dass** die Verbindungseinrichtung (30) jeweils einen über die Trennfläche (28, 29) einer Halbschale (4, 5) senkrecht vorstehenden Stift (31, 32) umfasst, der in eine in der Trennfläche (29) der jeweils anderen Halbschale (5, 4) angeordnete Vertiefung (34, 33) eingreift.

3. Geberzylinder nach Anspruch 1 oder 2, **dadurch gekennzeichnet, dass** die Schnappverbindung (12, 13) an jeder Halbschale (4, 5) wenigstens ein Laschenteil (13, 14) aufweist, das im Montagezustand eine Einrastfläche (18, 19) der Kolbenstange verriegelnd, vorzugsweise mit einer an ihm vorgesehenen Einrastnase (16, 17), hintergreift.

4. Geberzylinder nach einem der Ansprüche 1 bis 3, **dadurch gekennzeichnet, dass** an der Kolbenstange (2) wenigstens ein radial vorstehender Haltering (20) vorgesehen ist, der an seinem Ende einen axial zum Anschlagring (1) hin vorstehenden Haltebereich (22) aufweist, den im Montagezustand ein axial vorstehender Haltebereich (24) der Halbschalen (4, 5) verriegelnd untergreift.

5. Geberzylinder nach Anspruch 4, **dadurch gekennzeichnet, dass** an der Kolbenstange (2) axial voneinander beabstandet zwei Halteringe (20, 21) vorgesehen sind, deren axial vorstehende Haltebereiche (22, 23) im Montagezustand zwei an den Halbschalen (4, 5) axial voneinander beabstandete Haltebereiche (24, 25) verriegelnd übergreifen.

6. Geberzylinder nach einem der Ansprüche 3 bis 5, **dadurch gekennzeichnet, dass** die Laschenteile (13, 14) der Halbschalen (4, 5) die Einrastflächen (18, 19) der Kolbenstange (2) dann verriegelnd hintergreifen, wenn der Haltebereich (24) vollständig unter den Haltebereich (22) des Halteringes (20) der Kolbenstange (2) geschoben ist oder wenn die Haltebereiche (24, 25) vollständig unter die Haltebereiche (22, 23) der Halteringe (20, 21) der Kolbenstange (2) geschoben sind.

7. Geberzylinder nach einem der Ansprüche 3 bis 6, **dadurch gekennzeichnet, dass** die Verbindungseinrichtung (41) jeweils einen über die Trennfläche (28, 29) einer Halbschale (4, 5) vorstehenden, axial verlaufenden Vorsprung (38, 37) umfasst, der im Montagezustand in eine in der Trennfläche (29, 28) der jeweils anderen Halbschale (5, 4) angeordnete, komplementär ausgebildete Vertiefung (39, 40) verriegelnd eingreift.

8. Geberzylinder nach Anspruch 6, **dadurch gekennzeichnet, dass** die Vorsprünge (37, 38) und die Vertiefungen (39, 40) axial verriegelbare, schwalbenschwanzartige Verbindungen herstellen.

9. Geberzylinder nach einem der Ansprüche 4 bis 8, **dadurch gekennzeichnet, dass** die Einrastflächen (18, 19) an der dem Anschlagring (1) abgewandten Seite des Halteringes (20) ausgebildet sind.

## Claims

1. Master cylinder having a stop arrangement for a retracted piston of the cylinder, having a stop ring (1) which is connected to a housing of the master cylinder, and a piston rod stop (3) which has a spherical bearing face (9, 10) on its side which faces the stop ring (1), which bearing face (9, 10) bears against a spherical bearing face (11) of complementary configuration of the stop ring, **characterized in that** the piston rod stop (3) comprises two half shells (4, 5) which are connected to one another and surround a piston rod (2) of the master cylinder, which piston rod (2) runs through the stop ring (1), **in that** the half shells (4, 5) are connected to one another with the aid of a connecting device (30, 41), **in that** each half shell (4, 5) is connected to the piston rod (2) with the aid of a snap-action connection (12, 13), and **in that** the piston rod (2) has at least one holding region (22, 23) which projects axially to the side of the stop ring (1) and on which, in the assembled state, an axially projecting holding region (24) of the piston rod stop (3) acts in a locking manner.

2. Master cylinder according to Claim 1, **characterized in that** the connecting device (30) comprises in each case one pin (31, 32) which projects perpendicularly over the dividing face (28, 29) of a half shell (4, 5) and engages into a depression (34, 33) which is arranged in the dividing face (29) of the respective other half shell (5, 4).

3. Master cylinder according to Claim 1 or 2, **characterized in that** the snap-action connection (12, 13) on each half shell (4, 5) has at least one tongue part (13, 14) which, in the assembled state, engages behind a latching face (18, 19) of the piston rod in a locking manner, preferably with a latching lug (16, 17) which is provided on it.

4. Master cylinder according to one of Claims 1 to 3, **characterized in that** at least one radially projecting holding ring (20) is provided on the piston rod (2), which holding ring (20) has, at its end, a holding region (22) which projects axially towards the stop ring (1) and, in the assembled state, is engaged under by an axially projecting holding region (24) of the half shells (4, 5) in a locking manner.

5. Master cylinder according to Claim 4, **characterized in that** two holding rings (20, 21) are provided spaced apart axially from one another on the piston rod (2), the axially projecting holding regions (22, 23) of which holding rings (20, 21), in the assembled state, are engaged over in a locking manner by two holding regions (24, 25) which are spaced apart axially from one another on the half shells (4, 5).

6. Master cylinder according to one of Claims 3 to 5, **characterized in that** the tongue parts (13, 14) of the half shells (4, 5) engage behind the latching faces (18, 19) of the piston rod (2) in a locking manner when the holding region (24) is pushed completely under the holding region (22) of the holding ring (20) of the piston rod (2), or when the holding regions (24, 25) are pushed completely under the holding regions (22, 23) of the holding rings (20, 21) of the piston rod (2).

7. Master cylinder according to one of Claims 3 to 6, **characterized in that** the connecting device (41) comprises in each case one axially running projection (38, 37) which projects over the dividing face (28, 29) of a half shell (4, 5) and, in the assembled state, engages in a locking manner into a depression (39, 40) of complementary configuration which is arranged in the dividing face (29, 28) of the respective other half shell (5, 4).

8. Master cylinder according to Claim 6, **characterized in that** the projections (37, 38) and the depressions (39, 40) produce axially lockable, dovetail-like connections.

9. Master cylinder according to one of Claims 4 to 8, **characterized in that** the latching faces (18, 19) are configured on that side of the holding ring (20) which faces away from the stop ring (1).

## Revendications

1. Maître-cylindre comprenant un agencement de butée pour un piston du cylindre en position rentrée, comprenant une bague de butée (1) connectée à un boîtier du maître-cylindre et une butée de tige de piston (3) qui présente, au niveau de son côté tourné vers la bague de butée (1), une surface de butée de forme sphérique (9, 10), qui s'applique contre une surface de butée de forme sphérique (11) de la bague de butée, réalisée de manière complémentaire, **caractérisé en ce que** la butée de tige de piston (3) comprend deux demi-coques (4, 5) connectées l'une à l'autre qui entourent une tige de piston (2) du maître-cylindre s'étendant à travers la bague de butée (1), **en ce que** les demi-coques (4, 5) sont connectées l'une à l'autre à l'aide d'un dispositif de connexion (30, 41), **en ce que** chaque demi-coque (4, 5) est connectée à l'aide d'une connexion par encliquetage (12, 13) à la tige de piston (2), et **en ce que** la tige de piston (2) présente au moins une région de retenue (22, 23) saillant axialement par rapport au côté de la bague de butée (1), sur laquelle, dans l'état de montage, s'engage par verrouillage une région de retenue saillant axialement (24) de la butée de tige de piston (3).

2. Maître-cylindre selon la revendication 1, **caractérisé en ce que** le dispositif de connexion (30) comprend à chaque fois une goupille (31, 32) faisant saillie perpendiculairement au-delà de la surface de séparation (28, 29) d'une demi-coque (4, 5), laquelle goupille s'engage dans un renfoncement (34, 33) disposé dans la surface de séparation (29) de l'autre demi-coque respective (5, 4).

3. Maître-cylindre selon la revendication 1 ou 2, **caractérisé en ce que** la connexion par encliquetage (12, 13) présente au niveau de chaque demi-coque (4, 5) au moins une partie de patte (13, 14) qui, dans l'état de montage, s'engage par l'arrière par verrouillage avec une surface d'encliquetage (18, 19) de la tige de piston, de préférence avec un ergot d'encliquetage (16, 17) prévu sur celle-ci.

4. Maître-cylindre selon l'une quelconque des revendications 1 à 3, **caractérisé en ce qu'**au moins une bague de retenue saillant radialement (20) est prévue sur la tige de piston (2), laquelle présente, au niveau de son extrémité, une région de retenue (22) faisant saillie axialement vers la bague de butée (1), laquelle région de retenue vient en prise par le dessous par verrouillage dans l'état de montage avec une région de retenue saillant axialement (24) des demi-coques (4, 5).

5. Maître-cylindre selon la revendication 4, **caractérisé en ce que** deux bagues de retenue (20, 21) espacées axialement l'une de l'autre sont prévues au niveau de la tige de piston (2), dont les régions de retenue saillant axialement (22, 23) viennent en prise par le dessus par verrouillage dans l'état de montage avec deux régions de retenue (24, 25) espacées axialement l'une de l'autre au niveau des demi-coques (4, 5).

6. Maître-cylindre selon l'une quelconque des revendications 3 à 5, **caractérisé en ce que** les parties de patte (13, 14) des demi-coques (4, 5) viennent en prise par l'arrière par verrouillage avec les surfaces d'encliquetage (18, 19) de la tige de piston (2) lorsque la région de retenue (24) est enfoncée complètement sous la région de retenue (22) de la bague de retenue (20) de la tige de piston (2) ou lorsque les régions de retenue (24, 25) sont complètement enfoncées sous les régions de retenue (22, 23) des bagues de retenue (20, 21) de la tige de piston (2).

7. Maître-cylindre selon l'une quelconque des revendications 3 à 6, **caractérisé en ce que** le dispositif de connexion (41) comprend à chaque fois une saillie s'étendant axialement (38, 37) faisant saillie au-delà de la surface de séparation (28, 29) d'une demi-coque (4, 5), laquelle saillie, dans l'état de montage, s'engage par verrouillage dans un renfoncement (39, 40) réalisé de manière complémentaire, disposé dans la surface de séparation (29, 28) de l'autre demi-coque respective (5, 4).

8. Maître-cylindre selon la revendication 6, **caractérisé en ce que** les saillies (37, 38) et les renfoncements (39, 40) créent des connexions verrouillables axialement de type en queue d'aronde.

9. Maître-cylindre selon l'une quelconque des revendications 4 à 8, **caractérisé en ce que** les surfaces d'encliquetage (18, 19) sont réalisées au niveau du côté de la bague de retenue (20) opposé à la bague de butée (1).
